# EUROPEAN PATENT SPECIFICATION

(11) **EP 1 749 882 B1**
(45) Date of publication and mention of the grant of the patent: **19.09.2012**
(21) Application number: 05728554.6
(22) Date of filing: 11.04.2005
(51) Int. Cl.: C12G 3/04, A23G 9/04

(54) **NOVEL ALCOHOLIC BEVERAGE**
NEUES ALKOHOLISCHES GETRÄNK
NOUVELLE BOISSON ALCOOLISÉE

(30) Priority: 19.05.2004 JP 2004149704
(43) Date of publication of application: 07.02.2007
(73) Proprietor: Lotte Co., Ltd., Tokyo (JP)
(72) Inventor: MASUDA, Yutaka, Kitakatsushika-gun, Saitama 3440113 (JP); YOKOTA, Yoshihiro, 3650033 (JP); USUI, Masakatsu, 1130033 (JP); SEKI, Keiko, 3500016 (JP)
(74) Representative: Westendorp, Michael Oliver
(86) International application number: PCT/JP2005/007015
(87) International publication number: WO 2005/111191

(56) References cited:
- EP-A2- 1 051 913
- WO-A1-00/30468
- WO-A1-01/60184
- WO-A1-96/37120
- JP-A- 2 200 151
- JP-B2- 3 406 531
- JP-B2- 07 077 553
- JP-U- 59 113 090
- US-A- 4 988 529
- US-A- 5 866 191
- US-A- 6 058 721
- US-A1- 2003 219 517
- 25 April 1972 article HANZAWA K. ET AL.: 'Ice Cream Handbook', pages 19 - 22, XP002998111

## Description

### Technical Field to Which the Invention Pertains

The present invention relates to a novel alcoholic beverage and, more particularly, to an alcoholic beverage with fluidity, which is capable of sensing the remaining of at least part of fine ice pieces, and is drinkable under freezing conditions, particularly at a mixture temperature of -15°C to -2°C, preferably of -12°C to -4°C.

### Background Art

An attempt to obtain an alcoholic beverage which is drinkable and has high palatability under freezing conditions has been made in various ways in the past.

Some frozen alcoholic beverages in which alcoholic beverages such as cocktails are frozen have already been marketed as frozen cocktails. However, these frozen alcoholic beverages maintain a soft ice cream-like property under freezing conditions, and thus have high sugar concentration and/or alcohol concentration.

It is known that the invention to improve such frozen cocktails with high sugar concentration and/or high alcohol concentration includes the invention of the soft ice cream-like frozen alcoholic beverage containing sugar alcohol with an alcohol concentration from 1% by volume to 18% by volume inclusive, wherein the soft ice cream-like frozen alcoholic beverage is eatable by freezing in a home refrigerator (for example, refer to Patent Document 1). More specifically, this frozen confectionery is not a mixture of ice pieces and a mix, and thus is different from the alcoholic beverage of the present invention.

It is also known that the invention of the ready-to-freeze alcoholic beverage having a pH of about 3.0 to about 5.0 includes alcohol, sugar, flavoring, water, a stabilizer containing locust bean gum, guar gum, and optionally pectin, and other ingredients, wherein the ready-to-freeze alcoholic beverage forms crushing ice-like fine crystal structure at refrigerator temperature (about -5 to about 20 degrees Fahrenheit) after left in a refrigerator for about 3 hours to about 6 hours (for example, refer to Patent Document 2). More specifically, this frozen confectionery is not a mixture of ice pieces and a mix, and thus is different from the alcoholic beverage of the present invention.

Furthermore, there is known the invention of the frozen confectionery containing saccharide, 0.01 to 5% by weight of a stabilizer, and 0.1 to 5% by weight of alcohol, having a soft scooping property, and excellent in a shape retaining property hard to melt after squeezing out and leaving at room temperature (for example, refer to Patent Document 3). More specifically, the frozen confectionery is poor in fluidity, and thus is different from the alcoholic beverage of the present invention.
US 4988529 discloses milk shakes comprising tiny pieces of ice. EP 1051913 teaches a cold confectionary comprising ice fragments.

Any of these conventional frozen alcoholic beverages are the ones having soft ice-cream like properties, crushing ice-like properties, or sherbet-like properties, but not the ones having properties containing ice pieces with a sensible degree of size like the alcoholic beverage of the present invention. More specifically, these frozen alcoholic beverages contain fine ice crystals (hereinafter, abbreviated as cryohydrates) produced by the crystallization of water during freezing of the mixtures because of alcoholic beverages obtained simply by agitating and freezing raw material mixtures (alcoholic beverage base mixes), but are alcoholic beverages poor in sensation of coolness coming from direct feel of ice pieces upon drinking because of not alcoholic beverages in which the ice pieces with the sensible degree of size are separately added. In the rare case of a significant increase in mixture temperature during storage or transportation, the cryohydrates in the mixtures grow from normal size (30 to 55 µm) into coarsening, and are placed in a recognizable state (coarsened cryohydrates not less than 0.06 mm). However, these coarsened cryohydrates are not ones giving sensation of coolness just causing graininess because they generally have needle-like crystal shapes, and are nonuniformly present in a product.

On the other hand, there is known the process for producing the sherbet-like frozen alcoholic beverage, comprising the steps of: cutting an ice block into small pieces or small grains, cooling an alcoholic beverage at a temperature below the freezing point, and allowing the cooled alcoholic beverage to be uniformly mixed with the above cut ice under a temperature atmosphere below the freezing point of the above alcoholic beverage, wherein a freezing layer of the above cooled alcoholic beverage is formed on each other's gaps and the surface portion of the above cut ice (for example, refer to Patent Document 4).

However, this frozen alcoholic beverage cannot provide such smooth sensation of drinking as the present invention, because the size of shaved ice to be added is equal to that of small piece-like cut ice or small grain-like cut ice passing through a sieve with an aperture of about 3 mm, preferably of about 1 mm, and hence the size of ice pieces thereof is larger than that of the fine ice pieces of the present invention.

Patent Document 1: Japanese Unexamined Patent Publication No. 10(1998) - 117763
Patent Document 2: PCT Japanese Publication No. 9-508027
Patent Document 3: Japanese Patent Gazette No. 3406531
Patent Document 4: Japanese Patent Publication No. 7-77553

### Disclosure of the Invention

### Problems to be Solved by the Invention

It is an object of the present invention to provide an alcoholic beverage having appropriate sensation of coolness and excellent sensation of drinking because of having fluidity under temperature conditions of -15°C to -2°C, which was difficult for such prior art as described above to obtain, and being rich in palatability for the sake of neither being excessively sweet nor being too strong sensation of alcohol, as well as sensing the remaining of at least part of ice pieces added.

### Means for Solving the Problems

To solve the above problems, the present inventor et al. have devoted themselves to study, found that it is possible to easily and appropriately drink any alcoholic beverage, wherein an alcoholic beverage base mix containing alcohol and one or more kinds of water-soluble substances is mixed with ice pieces in a proportion of 20:80 to 80:20, and subjected to aeration, agitation, and cooling so that the volume fraction of gas contained therein is in the range of 1% to 150%, and so that the mixture temperature is lower than -1°C, whereby the resulting gas-containing matter has an alcohol concentration not less than 1.0% by volume, and has fluidity under temperature conditions of -15°C to -2°C, fine ice pieces with a major axis length of 0.06 mm to 0.8 mm being present in an amount of at least 80% by weight of the total so that the remaining of at least part of the fine ice pieces is sensed, and that it is possible to provide an alcoholic beverage having a novel pleasant sensation of coolness and feeling of swallowing, appropriate sensation of alcohol, and excellent flavor induced through coexistence of fine ice pieces and bubbles, and brought the present invention to completion.

In addition, the present inventor et al. have found that it is possible to easily and appropriately drink any alcoholic beverage, wherein an alcoholic beverage base mix containing alcohol and one or more kinds of water-soluble substances is mixed with ice pieces in a proportion of 20:80 to 80:20, subjected to aeration, agitation, and cooling so that the volume fraction of gas contained therein is in the range of 1% to 150%, and so that the mixture temperature is lower than -1°C, and further freeze-hardened under temperature conditions not more than -20°C, whereby the resulting gas-containing matter has an alcohol concentration not less than 1.0% by volume, and is given fluidity upon increasing the temperature to -15°C to -2°C, fine ice pieces with a major axis length of 0.06 mm to 0.8 mm being present in an amount of at least 80% by weight of the total so that the remaining of at least part of the fine ice pieces is sensed, because even if freeze-hardened under temperature conditions not more than -20°C, the fluidity is restored by increasing the temperature to -15°C to -2°C.

In another addition, the present inventor et al. have found that it is possible to easily and appropriately drink the alcoholic beverage of the present invention, because if the melting start temperature of its alcoholic beverage base mix is in the range of -20°C to -2°C in measurement using differential scanning calorimetry, the mixture temperature of the alcoholic beverage has fluidity under temperature conditions of -15°C to -2°C.

In still addition, the present inventor et al. have found that the alcoholic beverage of the present invention has novel pleasant sensation of coolness and feeling of swallowing because when ice pieces not passing through a sieve with an aperture of 3 mm are mixed with an alcoholic beverage base mix of a temperature not less than -1.0°C, and subjected to aeration, agitation and cooling to prepare the corresponding fine ice pieces of the alcoholic beverage of the present invention, the ice pieces are placed in a state of pleasant feeling of swallowing.

Furthermore, the alcoholic beverage of the present invention has fluidity under temperature conditions under which its mixture temperature is in the range of -15°C to -2°C, so that a product in which the alcoholic beverage of the present invention is filled into a cheer pack can be well repasted by being squeezed out of the cheer pack.

### Effects of the Invention

As has been described above, the alcoholic beverage of the present invention has fluidity under temperature conditions under which its mixture temperature is in the range of -15°C to -2°C, and thus is easily and appropriately drinkable at such low temperature.

In addition, the alcoholic beverage of the present invention has novel pleasant sensation of coolness and feeling of swallowing, appropriate sensation of alcohol, and excellent flavor induced through coexistence of fine ice pieces and bubbles.

Furthermore, the alcoholic beverage of the present invention restores the fluidity and is given a combination of smooth and pleasant feeling of swallowing, excellent flavor of being neither excessively sweet nor being gooey, and pleasant sensation of coolness when freeze-hardened under temperature conditions not more than -20°C before increasing the temperature to -15°C to -2°C.

### Best Mode for Carrying Out the Invention

Hereinafter, an embodiment of the present invention will be described in detail.

### (Explanation of terms)

The following terms employed in the present specification should be used in the sense shown below.

The term "alcoholic beverage" is used to mean the alcoholic beverage prescribed in Liquor Tax Law Chapter 1, Section 2.

The term "drink" is used to mean repasting an alcoholic beverage by pouring it into the mouth with the aid of its fluidity produced by tilting a container, or repasting an alcoholic beverage by sucking it through a straw and/or a thing of a similar kind without adding any operation such as squeezing or scraping out an alcoholic beverage contained in a container such as a cup and a glass with a spoon and the like. However, it is to be understood that the alcoholic beverage of the present invention is not intended to prevent repasting with a spoon and the like other than direct drinking from a container, or drinking with a straw and the like.

### (About ice pieces)

One of the most characteristic particulars of the present invention is to be an alcoholic beverage in which ice pieces with a sensible degree of size are added, but not one in which fine ice pieces produced by the crystallization of water content during freezing of a mixture are added. The ice pieces are directly sensed upon drinking, allowing for high sensation of coolness. Specifically, the characteristic particulars of the present invention are that the alcoholic beverage of the present invention has fluidity at a temperature of -15°C to -2°C, and at the same time, fine ice pieces having a major axis length of 0.06 mm to 0.8 mm are present in an amount of at least 80% by weight of the total without being reduced by melting so that the remaining of at least part of the fine ice pieces is sensed. This is achieved by adjusting a mixed composition of ice piece loadings and an alcoholic beverage mix. More specifically, it is possible to design to enhance the fluidity of an alcoholic beverage by reducing the ice piece loadings, but in the case of too little amount of the ice pieces, ice is likely to melt, and unlikely to provide its mouthfeel. On the other hand, it is possible to design to enhance the fluidity of the alcoholic beverage by adjusting the mixed composition of the alcoholic beverage base mix, and increasing the loadings of alcohol and water-soluble substance which will lower the freezing temperature of water, but in the light of good or bad taste as an alcoholic beverage, viscosity, and the like, the loadings require some consideration. Accordingly, the alcoholic beverage of the present invention provides the most preferable fluidity and mouthfeel by mixing an alcoholic beverage base mix containing alcohol and at least one or more kinds of water-soluble substances with ice pieces in a proportion of 20:80 to 80:20, and preferably of 35:65 to 65:35.

Such a mixed composition will allow the alcoholic beverage of the present invention to have fluidity and to be easily and appropriately drunk without departing from the scope of the fine ice pieces defined in the present invention (fine ice pieces having a major axis length of 0.06 mm to 0.8 mm should be present in an amount of at least 80% by weight of the total) under temperature conditions under which the mixture temperature is in the range of -15°C to -2°C. Additionally, even if freeze-hardened under temperature conditions not more than -20°C before increasing the temperature to -15°C to -2°C, the alcoholic beverage of the present invention will restore the fluidity without departing from the scope of the fine ice pieces defined in the present invention (fine ice pieces having a major axis length of 0.06 mm to 0.8 mm should be present in an amount of at least 80% by weight of the total), providing novel pleasant sensation of coolness and feeling of swallowing, and easy and appropriate drinking.

### (About alcohol)

Alcohol in accordance with the alcoholic beverage of the present invention contributes to avoid hardening an alcoholic beverage in a solid state by allowing the freezing temperature (frozen point) of an alcoholic beverage to be lowered. It should be noted that the alcoholic beverage of the present invention is particularly adapted to contain not less than 1.0% by volume of ethyl alcohol in order to meet the criteria of the alcoholic beverage prescribed in Liquor Tax Law. On top of that, while alcohol that can be appropriately used may be any edible alcohol, and specifically may include glycerine, polyglycerine which is a polymer of glycerine, and propylene glycol, the ethyl alcohol is most preferable for the alcoholic beverage of the present invention.

### (About water-soluble substance)

The water-soluble substances in accordance with the alcoholic beverage of the present invention also contribute to lowering the freezing temperature (frozen point) of the alcoholic beverage. This is intended to use the phenomenon in which when other substances melt in water, the freezing temperature of water is lowered, and melting as many substances as possible makes it difficult to freeze the above substances even in a negative temperature zone. As a result, it is possible to provide fluidity allowing the subject beverage to be drunk at a temperature of -15°C to -2°C, preferably of -12°C to -4°C (which allows the subject beverage to be sucked through a straw and the like, preferably to naturally flow simply by tilting a container).

A suitable water-soluble substance includes saccharide, sugar alcohol, acidulant, salt, and a protein. Hereinafter, while detailed examples in each group are shown, it is to be understood that the present invention is not intended to be limited by the following examples.

The water-soluble substances in accordance with the alcoholic beverage of the present invention may be, for example, saccharide. Specifically, monosaccharide such as fructose and glucose, disaccharide such as sugar, trehalose, maltose, and lactose, various kinds of oligosaccharide such as maltotriose, maltotetraose, fructooligosaccharide, galacto-oligosaccharide, xylo-oligosaccharide, and gentioligosaccharide, various kinds of glutinous starch syrup, a powdered candy, and honey are suitable therefor. In addition, dietary fiber such as polydextrose different from saccharide is suitable for the water-soluble substances in accordance with the alcoholic beverage of the present invention as are the glutinous starch syrup and the powdered candy

The water-soluble substances in accordance with the alcoholic beverage of the present invention may be, for example, sugar alcohol. Specifically, xylitol, lactitol, maltitol, sorbitol, mannitol, and the like, or reduced glutinous starch syrup are suitable therefor.

The water-soluble substances in accordance with the alcoholic beverage of the present invention may be, for example, acidulant. Specifically, edible acids such as a citric acid, a malic acid, and a tartaric acid, and salt thereof are suitable therefor.

The water-soluble substances in accordance with the alcoholic beverage of the present invention may be, for example, salt. Specifically, overall edible salt such as sodium chloride and potassium chloride is suitable therefor.

The water-soluble substances in accordance with the alcoholic beverage of the present invention may be, for example, a protein. Specifically, edible proteins such as a lactoprotein, a soybean protein, a wheat protein, and a pea protein, or general protein-containing food such as dairy products and soymilk are suitable therefor.

It should be noted that, in the light of good or bad taste, viscosity, and the like as alcoholic beverages, these water-soluble substances require some consideration in loading balance and loadings thereof, which are determined according to the kind of water-soluble substances and alcohol to be combined, as appropriate. For example, the acidulant and the salt have constraints on usage thereof, and find it difficult to be the principal method for lowering the freezing temperature, because they allow the freezing temperature to be effectively lowered with small amounts, but have a significant impact on flavor. On the other hand, the saccharide and the sugar alcohol have a large molecular weight compared with the acidulant and the salt, causing low efficiency to lower the freezing temperature, but have small problems with flavor and physical properties, making it possible to use larger amounts and providing effective measures to lower the freezing temperature. Constraints on the use of the saccharide largely depend on its sweetness and the viscosity of its aqueous solution. For example, in the case of attempting to obtain a sugar solution with a physical property, which keeps fluidity without being freezed even at about -8°C, the use of sucrose alone as sugar requires concentration as high as 50% by weight. However, if the sucrose liquid with this concentration is drunk directly or drunk even after other tasty raw materials, such as fruit juice or coffee, are added, it becomes poor in palatability due to too strong sweetness. For such defects, combined use of saccharide with low sweetness (for example, glutinous starch syrup and oligosaccharide) and/or sugar alcohol (for example, sorbitol, lactitol, xylitol, and reduced glutinous starch syrup) makes it possible to improve the strength of the sweetness. However, the saccharide has further the effect to increase the viscosity and reduce the fluidity, and the effect to produce gooey feeling of drinking, and thus presents problems that excessive addition lessens sensation of coolness. On the other hand, for the sugar alcohol, quality of taste and laxative action thereof constitute the constraint factor of the usage.

Meanwhile, an increase in alcohol content is effective in lowering the freezing temperature of water. However, when alcohol is excessively used with the intention to lower the freezing temperature, alcoholic smell may become too strong to lose the balance of flavor as a product and to lessen palatability as an alcoholic beverage. More specifically, as described above, selecting and mixing substances used as raw materials are effective for the purpose of providing an alcoholic beverage having fluidity, which is drinkable under freezing temperature conditions, which has neither excessive sweetness nor too strong sensation of alcohol, and which is excellent in feeling of drinking and rich in palatability, but may be hardly adequate.

### (About fats and oils)

Reversely, the addition of water-insoluble substances such as fats and oils has the effect to reduce the mixed amount of water and helps lower the freezing temperature, thus providing the effect to lower the freezing temperature of water that can be well used. For example, when part of water in a solution of 70 parts by weight of water and 30 parts by weight of sugar is replaced by fats and oils into 50 parts by weight of water, 20 parts by weight of fats and oils, and 30 parts by weight of sugar, the concentration of the sugar in the water phase portion rises, and the freezing temperature drops without changing the overall sweetness. While the use of a substance whose melting point is in a negative temperature zone like medium chain triglyceride as fats and oils at this time improves the fluidity at low temperature, and may be desirable, any commonly edible fats and oils are not particularly limited.

### (About stabilizer)

It should be noted that as another embodiment of the present invention, stabilizers such as a polysaccharide thickener, pectin, gelatin, and agar may be further added. These stabilizers add smooth feeling of drinking to the alcoholic beverage of the present invention, and prevent worsened mouthfeel and reduced fluidity attributable to coarsened ice crystals during frozen storage. In this regard, the loadings are determined according to the kind of stabilizer, as appropriate, but it is preferable that the alcoholic beverage of the present invention be enough to keep from such high viscosity as it cannot be sucked through a straw, or from gelatinization.

### (About other added substances)

It is possible to mix saccharide, sugar alcohol, acidulant, salt, and a protein, and juice/pulp, and mesophyll of various kinds of fruit such as a lemon, an orange, a grapefruit, a strawberry, a melon, a banana, a mango, and a pineapple, nuts and seeds such as a nut, dairy products such as milk, cream, and condensed milk, extracts such as fermented milk, coffee, and black tea, and concentrate thereof, finely powdered products such as coffee, black tea, and powdered tea, and gel-like food such as agar and a jelly as tasty raw materials. It is also possible to use a conventionally known foaming agent, for example, a proteolytic agent in order to enhance a foaming property.

### (About aeration)

The alcoholic beverage in accordance with the present invention requires to be a gas-containing substance, and an alcoholic beverage to be finally obtained may contain gas so that the volume fraction of the gas is in the range of 1% to 150%.

It should be noted that the term "gas," as used in the present invention, may be, for example, oxygen, nitrogen, carbon dioxide, air, inactive gas and substances that can be commonly used for other food.

It should be noted that the term "aeration," as used in the present invention, means to allow an object to contain gas, and the gas described here is contained in the object as fine bubbles with a size of about several hundred µm by agitation. While it is possible to allow the object to contain gas by the use of a device capable of conducting, for example, aeration, agitation, and cooling, such as a batch type ice cream freezer, the use of the device is not limited. In addition, the aeration may be conducted in any stage of the production process of the present alcoholic beverage, for example, may be conducted in advance before the agitation and the cooling, or may be conducted concurrently with the agitation and the cooling, or may be separately conducted anew after the agitation and the cooling.

Gas gives appropriate softness to a hardened alcoholic beverage, and any alcoholic beverage having the same freezing temperature provides softer mouthfeel, as the gas content increases, but provides slightly poor fluidity, as the gas content increases too much. In addition, containing the gas in the object reduces heat capacity per volume of the alcoholic beverage entering the mouth, providing the effect to prevent damage to the oral cavity or the throat even if the subject beverage is drunk at low temperature.

### (About mixture temperature)

It is desirable to drink the alcoholic beverage of the present invention at a temperature of -15°C to -2°C, preferably of -12°C to -4°C, but it is possible to drink the subject beverage even at higher temperature than -2°C which is the ceiling temperature, for example, it being possible to drink the subject beverage without problems even at 2°C. However, fine ice pieces mixed therein sometimes decrease or disappear before the temperature reaches 2°C, and deviate from the scope of the fine ice pieces (fine ice pieces having a major axis length of 0.6 mm to 0.8 mm should be present in an amount of at least 80% by weight of the total) defined in the present invention. In this case, the sensation of coolness becomes weak, and the flavor also becomes weak because molten ice is changed into water to dilute the whole. Although drinking is possible, the effects of the present invention may not be obtained.

In addition, it is possible to prepare the alcoholic beverage of the present invention so as to have fluidity at lower temperature than -15°C, which is the floor temperature, by further increasing alcohol concentration and/or sugar concentration to thereby lower the freezing temperature, in strictly technical terms. However, this presents a problem with excessively strong sensation of alcohol and sweetness, resulting in slightly poor palatability in flavor. In addition to this, rapid drinking at lower temperature below -15°C can cause frostbite on the oral cavity or the throat due to exposure to excessively low temperature. Although the present invention prevents damage to the oral cavity, the throat, or the like even if drunk at a low temperature of about -15°C, it is suspected that there would be a case of having a pain in the oral cavity or the throat after drinking at excessively low temperature despite varying between individuals. Accordingly, it is not desirable to keep the fluidity at excessively low temperature, it being desirable to drink the alcoholic beverage of the present invention at temperature at which the mixture temperature thereof is in the range of -15°C to -2°C, preferably of -12°C to -4°C.

Furthermore, the present inventor et al. have found that when ice not passing through a sieve with an aperture of 3 mm is mixed with an alcoholic beverage base mix of a temperature not less than -1.0°C, subjected to aeration, agitation, and cooling by the use of a pulverizer, particularly a continuous pulverizer having a cutting head, and prepared into uniformly fine ice pieces with the size and distribution of the ice pieces described above, the shape of the ice pieces is placed in a state of smooth feeling of swallowing, thus providing novel pleasant sensation of coolness and feeling of swallowing.

### (About melting start temperature)

The alcoholic beverage in accordance with the present invention is a mixture of the ice pieces and the alcoholic beverage base mix, so that the melting start temperature of the alcoholic beverage depends on the melting start temperature of the alcoholic beverage base mix and the freeze-thaw start temperature of the ice pieces. Accordingly, in order to obtain an alcoholic beverage having fluidity under temperature conditions of -15°C to -2°C such as the alcoholic beverage of the present invention, it is important to properly adjust the melting start temperature of the alcoholic beverage base mix. Here, when the melting start temperature of the alcoholic beverage base mix was measured with differential scanning calorimetry, it was confirmed that any alcoholic beverage containing an alcoholic beverage base mix at least not more than -2°C, preferably in the range of -15°C to -2°C came into an alcoholic beverage having the fluidity under temperature conditions under which the mixture temperature of the alcoholic beverage was in the range of -15°C to -2°C.

Next, the present invention will be described in detail with test examples. This test was carried out to examine the effects of the present invention.

### Test Example 1 (relationship between the difference in fluid temperature associated with the composition of saccharide and alcohol, and the measured melting temperature)

### Preparation of Sample 1:

1. Preparation of an alcoholic beverage base mix: 400.0 g of sugar, 1.0 g of carra-geenan, 2.0 g of a digest of milk protein, and 1273.0 g of fresh water as mixed water were introduced into a stainless-steel container, and warmed under agitation and mixing up to 85°C, followed by rapid cooling in ice water to obtain a sugar solution mix at 5°C. To the sugar solution mix, 324.0 g of commercial vodka (37 degrees) was added and mixed, and then fresh water was added in order to supplement the water reduced by evaporation during the foregoing warming to prepare 2.0 kg of the corresponding alcoholic beverage base mix as a whole.

2. Preparation of fine ice pieces: 4 kg of ice pieces was shaved with a shaving machine, the resulting shaved ice pieces were stored under conditions of -35°C, and then further pulverized with a hammer to obtain pulverized ice pieces, followed by the use of a sieve with an aperture of 0.8 mm to obtain fractures with a length less than about 0.8 mm. Subsequently, the fractures are separated into a retention portion and a transition portion by the use of a sieve with an aperture of 0.1 mm to obtain 3400 g of the retention portion to render this as fine ice pieces. When the fine ice pieces were observed with a microscope, ice pieces with a size less than 0.1 mm were not present, ice pieces with a size over 0.8 mm were scarcely present, almost all ice pieces had a size of 0.1 mm to 0.8 mm.

3. Preparation of alcoholic beverage: the fine ice pieces (size of 0.1 mm to 0.8 mm) were mixed with 2 kg of a product kept in a thermostatic bath of -10°C and 2 kg of an alcoholic beverage base mix cooled at -3°C, and then subjected to aeration, agitation and cooling in parallel by the use of a batch type ice cream freezer to obtain 3700 g of alcohol containing half-frozen fine ice pieces with an air content of 20% by volume. This alcohol was filled into 26 of pillow-shaped packaging materials (cheer packs) with a volume of 140 ml, and with a plastic tap, by 140 ml at a time so that fine ice pieces having a major axis length of 0.06 mm to 0.8 mm were present in an amount of 90% by weight of the total ice pieces, and an alcoholic beverage containing half-frozen fine ice pieces with a volume fraction of 20% was rendered as Sample 1 (the taps of the pillow-shaped packaging materials have plastic caps, and thus are easily detachable). Thirteen of them were instantly submitted to a sensory evaluation to ensure the fluidity immediately after the preparation. The remaining 13 were kept in a flash-freezer of -40°C for 6 hours, and hardened (presence of hardening). It should be noted that the mixture temperature immediately after products which had not been flash-freezed (absence of hardening) were prepared was -9.0°C.

### Preparation of Samples 2 to 8:

An alcoholic beverage containing fine ice pieces (presence of hardening) and the one (absence of hardening) from Samples 2 to 8 were prepared in a procedure similar to the preparation of Sample 1 except for the mixed composition shown in Table 1.

### Sensory evaluation of Samples (absence of hardening):

Products prepared in Sample 1, which had not been flash-freezed (absence of hardening) were repasted immediately after their preparation, and fluidity, mouthfeel, and flavor thereof were subjected to a sensory evaluation. Sample 1 had the property capable of being easily sucked through a straw and drunk, and sensation of coolness and smooth texture thereof had never been found in conventional alcoholic beverages.

Likewise, Samples 2 to 8 were subjected to the sensory evaluation. The results are shown in Table 1. It was found that Samples 2 to 8 had better fluidity as alcohol concentration and sugar concentration increased.

### Identification of fluid temperature (presence of hardening):

After Sample 1 (presence of hardening) was kept in a total of 15 thermostatic bathes at 1°C intervals from -1.0°C to -15.0°C for 6 hours, respectively, the plastic caps attached to the taps of the pillow-shaped packaging materials were removed to examine ease of obtaining the sample from the tap portions. As a result, the sample did not flow out easily at -12.0°C, but was able to be extracted from the taps at -11.0°C by squeezing the containers, and was able to be more easily extracted therefrom at -10°C. More specifically, Sample 1 was determined to attain a state adapted for drinking between -11°C and -10°C, and the temperature was rendered as fluid temperature (presence of hardening).

Samples 2 to 8 were subjected to the same evaluation. And, the results of the fluid temperature (presence of hardening) are shown in Table 1.

### Melting start temperature measurement on differential scanning calorimetry (DSC):

Ten mg of the alcoholic beverage base mix of Sample 1 was put in an aluminum container whose weight had been measured in advance, accurately weighed, and rendered as a sample. The sample was once increased to 50°C, and then cooled to -70°C at a rate of 50°C per minute, followed by being increased up to -10°C at a rate of 20°C per minute, and further increased from 10°C till the end of complete melting of ice at a rate of 5°C per minute. Then, an enthalpy change associated with heat absorption caused by the melting was measured, and the melting start temperature of the ice was determined. The melting start temperature of the alcoholic beverage base mix of Sample 1 was identified as -10.9°C by this method. The melting start temperature of the alcoholic beverage base mixes of Samples 2 to 8 was also subjected to the same measurement. The results are shown in Table 1.

[Table 1]

**Table 1 (1-1)**

| Sample | 1 | 2 | 3 | 4 | 5 | 6 | 7 | 8 |
|---|---|---|---|---|---|---|---|---|
| Sugar | 400 | 100 | 200 | 200 | 240 | 400 | 200 | 200 |
| Fructose | - | - | - | - | - | - | 100 | - |
| Glucose | - | - | - | - | - | - | - | 100 |
| Vodka (37°) | 324 | 66 | 66 | 130 | 130 | 646 | 324 | 324 |
| Carra-Geenan | 1.0 | 1.0 | 1.0 | 1.0 | 1.0 | 1.0 | 1.0 | 1.0 |
| Digest of milk protein | 2.0 | 2.0 | 2.0 | 2.0 | 2.0 | 2.0 | 2.0 | 2.0 |
| Fresh water | 1273 | 1831 | 1731 | 1667 | 1627 | 951 | 1373 | 1373 |
| Fine ice pieces | 2000 | 2000 | 2000 | 2000 | 2000 | 2000 | 2000 | 2000 |
| Total weight | 4000 | 4000 | 4000 | 4000 | 4000 | 4000 | 4000 | 4000 |

**Table 1 (1-2)**

| Sample | 1 | 2 | 3 | 4 | 5 | 6 | 7 | 8 |
|---|---|---|---|---|---|---|---|---|
| Alcohol weight (%) | 5.0 | 1.0 | 1.0 | 2.0 | 2.0 | 10.0 | 5.0 | 5.0 |
| DSC results (°C) | -10.9 | -1.5 | -2.0 | -3.3 | -3.8 | -15.1 | -10.1 | -10.1 |
| Fluidity immediately after preparation | ⊚ | × | ○∼Δ | ○ | ⊚ | ⊚ | ⊚ | ⊚ |
| Fluid temperature (presence of hardening) (°C) | -11.0 ∼ -12.0 | 0 ∼ -2.0 | -1.0 ∼ -2.0 | -3.0 ∼ -4.0 | -4.0 ∼ -5.0 | -15.0 ∼ -16.0 | -11.0 ∼ -12.2 | -10.0 ∼ -9.0 |
| Assessment | ⊚ | Δ | ○∼Δ | ○ | ⊚ | ⊚ | ⊚ | ⊚ |

| | | | | | | | | |
|---|---|---|---|---|---|---|---|---|
| *Fluidity ⊚: excellent fluidity ○: good fluidity Δ: slightly hard and poor fluidity ×: no fluidity *Assessment ⊚: excellent mouthfeel and flavor ○: good mouthfeel and flavor Δ: poor mouthfeel and flavor ×: bad mouthfeel and flavor | | | | | | | | |

### Test Example 2 (change in mixing ratio of fine ice pieces)

Alcoholic beverages containing fine ice pieces with test numbers 9 to 19 (absence of hardening) were prepared in a procedure similar to the preparation method of Test Example 1, and subjected to a sensory evaluation of fluidity, mouthfeel, and flavor thereof, except that alcoholic beverage base mixes were mixed with fine ice pieces at the mixing ratio shown in Table 2. The results are shown in Table 2.

[Table 2]

**Table 2**

| Sample | Ice (part by weight) (ice, alcoholic beverage base mix) | Fluidity | Mouthfeel/flavor | Assessment |
|---|---|---|---|---|
| 9 | 19 (760g, 3240g) | ⊚ | Little ice, and difficulty in swallowing due to rich taste and poor sensation of coolness as a whole. | × |
| 10 | 20 (800g 3200g) | ⊚ | Giving sensation of coldness of ice. Slightly strong sensation of richness. | ○∼Δ |
| 11 | 25 (1000g, 3,000g) | ⊚ | Increased sensation of coldness of ice, and improved whole flavor balance, with ease of swallowing. | ○ |
| 12 | 30 (1200g, 2800g) | ⊚ | Increased sensation of coldness of ice, and improved whole flavor balance, with ease of swallowing. | ○ |
| 13 | 35 (1400g, 2600g) | ⊚ | Rich in sensation of coldness of ice, and well flavor balance. | ⊚ |
| 14 | 50 (2000g, 2000g) | ⊚ | Rich in sensation of coldness of ice, and well flavor balance. | ⊚ |
| 15 | 65 (2600g, 1400g) | ○ | Rich in sensation of coldness of ice, and well flavor balance. | ⊚ |
| 16 | 70 (2800g, 1200g) | ○ | Rich in sensation of coldness of ice, but slightly poor in flavor. | ○ |
| 17 | 75 (3000g, 1000g) | ○∼Δ | Rich in sensation of coldness of ice, but slightly poor in flavor. | ○∼Δ |
| 18 | 80 (3200g, 800g) | Δ | Giving strong texture of ice, and a slightly little taste of the whole alcohol. | Δ |
| 19 | 81 (3240g, 760g) | × | Solid mouthfeel. Weak in flavor of the whole alcohol. | × |

| | | | | |
|---|---|---|---|---|
| *Fluidity ⊚: excellent fluidity ○: good fluidity Δ: slightly hard and poor fluidity ×: no fluidity *Assessment ⊚: excellent mouthfeel and flavor ○: good mouthfeel and flavor Δ: poor mouthfeel and flavor ×: bad mouthfeel and flavor | | | | |

### Test Example 3 (change in size of fine ice pieces)

Alcoholic beverages containing fine ice pieces with sample numbers 20 to 29 were prepared in a procedure similar to the preparation method of Test Example 1 (presence of hardening), and subjected to a sensory evaluation of fluidity, mouthfeel, and flavor thereof, except that fine ice pieces with the size shown in Table 3 were mixed with alcoholic beverage base mixes, and filled into a paper cup with a plastic lid, and with a volume of 200 ml. The results are shown in Table 3. It should be noted that a method for preparing the fine ice pieces with the size shown in Table 3 is as follows.

### Preparation of ice pieces:

Twenty kg of fine ice pieces was obtained by a method for preparing the fine ice pieces of Test Example 1, and rendered as ice pieces A. Almost all the ice pieces in the ice pieces A had a size of 0.1 to 0.8 mm.

Then, ice piece fractions with a size less than 0.1 mm produced in the process of obtaining the above fine ice pieces were further separated by the use of a sieve with an aperture of about 0.06 mm to obtain about 5 kg of ice pieces with a length less than 0.06 mm to render this as ice pieces B.

In addition, another ice pieces which were cut and crushed were separated by the use of a sieve with an aperture of 1.2 mm, and the fractions passed therethrough were further separated by the use of a sieve with an aperture of 0.8 mm to obtain 10 kg of the fractions retained on the sieve to render this as ice pieces C. The retention portion did not contain ice pieces with a length less than 0.8 mm.

### Measurement of ice piece size:

The size of the ice pieces from Samples 20 to 29 was measured by microscopic observation. The results are shown in Table 3.

### Sensory evaluation of Samples (presence of hardening):

Samples 20 to 29 (presence of hardening) were further kept in a thermostatic bath of -10°C for 6 hours, the content of a container was uniformly set to -10°C, and then repasted, followed by being subjected to a sensory evaluation of fluidity, mouthfeel, and flavor thereof. The results are shown in Table 3.

[Table 3]

**Table 3**

| Sample | Ice piece size (%) | | | Mouthfeel/flavor | Assessment |
|---|---|---|---|---|---|
| | Ice pieces B<0.06 mm | Ice pieces A 0.06 to 0.08mm | Ice pieces C 0.08 mm< | | |
| 20 | 0.0 | 100.0 | 0.0 | Good | ⊚ |
| 21 | 15.0 | 85.0 | 0.0 | Good | ○ |
| 22 | 20.0 | 80.0 | 0.0 | Good | ○ |
| 23 | 21.0 | 79.0 | 0.0 | Slightly poor feeling of ice | Δ |
| 24 | 25.0 | 75.0 | 0.0 | Poor feeling of ice | Δ∼X |
| 25 | 0.0 | 85.0 | 15.0 | Good | ○ |
| 26 | 0.0 | 80.0 | 20.0 | Slightly lack of smoothness | Δ |
| 27 | 0.0 | 79.0 | 21.0 | Lack of smoothness | X |
| 28 | 10.0 | 80.0 | 10.0 | Good | ○ |
| 29 | 5.0 | 90.0 | 5.0 | Good | ⊚ |

### Test Example 4 (difference in physical properties based on the presence or absence of fine ice pieces)

A comparative test was carried out to examine the difference in physical properties based on the presence or absence of fine ice pieces.

### Preparation of Sample 30:

An alcoholic beverage not containing fine ice pieces of Sample 30 was prepared in a procedure similar to the preparation method of Test Example 1, except that 2 kg of fine ice pieces was replaced by 2 kg of cooled fresh water.

### Sensory evaluation:

The resulting Sample 30 (comparative product: absence of fine ice pieces) and Sample 1 (the present invention: presence of fine ice pieces) were kept in a thermostatic bath of -10°C for 6 hours, and the content of a container was uniformly set to -10°C to render this as taste testing samples. The two kinds of taste testing samples were repasted, and subjected to a sensory evaluation of fluidity, mouthfeel and flavor thereof. The results of the sensory evaluation are shown in Table 4.

[Table 4]

**Table 4**

| | Fine ice pieces | Fluidity | Mouthfeel/flavor | Assessment |
|---|---|---|---|---|
| Sample 1 (present invention) | Presence | ⊚ | Rich in sensation of coolness, and well flavor balance. | ⊚ |
| Sample 30 (comparative product) | Absence | × | Drinking not allowed due to a sherbet-like solid. A little taste. | × |

### Test Example 5 (difference in gas content)

### Preparation of Samples 31 to 40:

Alcoholic beverages containing fine ice pieces with test numbers 31 to 40 (presence of hardening) were prepared in a procedure similar to the preparation method of Test Example 1, except for using the aeration ratio shown in Table 5.

### Sensory evaluation of Samples presence of hardening):

Samples 31 to 40 (presence of hardening) were further kept in a thermostatic bath of -10°C for 6 hours, the content of a container was uniformly set to -10°C, and then repasted, followed by being subjected to a sensory evaluation of fluidity, mouthfeel, and flavor thereof. The results are shown in Table 5.

[Table 5]

**Table 5**

| Sample | Volume fraction of gas (%) | Fluidity | Mouthfeel/flavor | Assessment |
|---|---|---|---|---|
| 31 | 0 | × | Strong flavor and sensation of coolness. Hard and difficulty in drinking. | × |
| 32 | 1 | Δ | Strong flavor and sensation of coolness. Drinkable, but slightly bad fluidity. | Δ |
| 33 | 5 | ○ | Strong flavor and sensation of coolness. Slightly increased smoothness, and drinkable without problems. | ○ |
| 34 | 10 | ○ | Strong flavor and sensation of coolness, but slightly suppressible. Increased smoothness and ease of drinking. | ○ |
| 35 | 30 | ⊚ | Giving appropriate flavor and sensation of coolness, and well balance between them. Smoothness and ease of drinking. | ⊚ |
| 36 | 70 | ⊚ | Giving appropriate flavor and sensation of coolness, and well balance between them. Smoothness and ease of drinking. | ⊚ |
| 37 | 100 | ⊚ | Slightly poor flavor and sensation of coolness. Smoothness and ease of drinking. | ○ |
| 38 | 120 | ○ | Slightly poor flavor and sensation of coolness. Smooth and soft mouthfeel. | ○ |
| 39 | 150 | ○∼Δ | Slightly poor flavor and sensation of coolness. Smooth and soft mouthfeel. | ○∼Δ |
| 40 | 155 | Δ | Poor flavor and sensation of coolness. Smooth and soft mouthfeel, but slightly bad fluidity. | × |

| | | | | |
|---|---|---|---|---|
| *Fluidity ⊚: excellent fluidity ○: good fluidity Δ: slightly hard and poor fluidity ×: no fluidity *Assessment ⊚: excellent mouthfeel and flavor ○: good mouthfeel and flavor Δ: poor mouthfeel and flavor ×: bad mouthfeel and flavor | | | | |

Next, while a description will be given of best mode for carrying out the invention in detail with examples, it is to be understood that the present invention is not intended to be limited by the following examples.

### Example 1

### (Absence of hardening)

Sixteen kg of sugar, 14.0 kg of glucose, 30.0 kg of glutinous starch syrup, 0.2 kg of guar seed gum, 0.2 kg of a digest of milk protein, and 66.8 kg of fresh water as mixed water were put in a stainless-steel agitation tank with a warming jacket, and with a volume of 200 L, warmed up to 65°C under agitation and mixing, and then sterilized at 85°C for 30 seconds by the use of a plate pasteurizer, followed by being cooled up to 2°C in a cooling plate portion and being directly put in another stainless-steel agitation tank with a cooling jacket to obtain a sugar solution mix. To the sugar solution mix, 8.0 kg of concentrated grapefruit juice, 0.2 kg of grapefruit flavor were added, agitated, and mixed, followed by addition and mixing of 64.6 kg of commercial vodka (37°) to obtain 200 kg of a grapefruit-flavored alcoholic beverage base mix. One part by weight of the alcoholic beverage base mix cooled to 0°C and one part by weight of shaved ice cut by the use of an industrial shaving machine were mixed to obtain a slurry product, and then allowed passage of a slit with an aperture of about 0.4 mm under pressure, followed by being subjected to aeration, agitation, and cooling in parallel by the use of a continuous ice cream freezer (small testing apparatus), whereby the fine ice pieces with a major axis length of 0.06 mm to 0.8 mm were present in an amount of 85% by weight of the total to obtain an alcoholic beverage containing semi-frozen fine ice pieces with a volume fraction of 40% and a mixture temperature of -9.5°C. When this alcohol was filled into a plastic cup with a volume of 200 ml, and gently sucked by inserting a straw thereinto, it allowed ease of sucking and drinking, and had smooth and soft texture and appropriate sensation of coolness. This tasting sample had a combination of favorable sensation of alcohol, good grapefruit flavor, and favorable sweetness, and was alcohol with unprecedented and comfortable to drink.

### Example 2

### (Presence of hardening)

Sixteen kg of sugar, 14.0 kg of glucose, 30.0 kg of glutinous starch syrup, 0.2 kg of guar seed gum, 0.2 kg of a digest of milk protein, and 66.8 kg of fresh water as mixed water were put in a stainless-steel agitation tank with a warming jacket, and with a volume of 200 L, warmed up to 65°C under agitation and mixing, and then sterilized at 85°C for 30 seconds by the use of a plate pasteurizer, followed by being cooled to 2°C in a cooling plate portion and being directly put in another stainless-steel agitation tank with a cooling jacket to obtain a sugar solution mix. To the sugar solution mix, 8.0 kg of concentrated lemon juice and 0.2 kg of lemon flavor were added, agitated, and mixed, followed by addition and mixing of 64.6 kg of commercial vodka (37°) to obtain 200 kg of a lemon-flavored alcoholic beverage base mix. One part by weight of the alcoholic beverage base mix cooled to 0°C and one part by weight of shaved ice which was cut into ice pieces not passing through a sieve with an aperture of 3 mm by the use of an industrial shaving machine were mixed to obtain a slurry product, and then allowed passage of a slit with an aperture of about 0.4 mm under pressure, followed by being subjected to aeration, agitation, and cooling in parallel by the use of a continuous ice cream freezer (small testing apparatus). This was then filled into a plastic lid cup with a volume of 200 ml, kept in a flash-freezer of -40°C for 6 hours, and freeze-hardened, whereby the fine ice pieces with a major axis length of 0.06 mm to 0.8 mm are present in an amount of 85% by weight of the total to obtain a semi-frozen alcoholic beverage containing fine ice pieces with a volume fraction of 40%. This was further kept in a freezer of -10°C for 6 hours and the content of a container was uniformly set to -10°C. When this was gently sucked by inserting a straw thereinto, this allowed ease of sucking and drinking, and had smooth and soft texture and appropriate sensation of coolness. In addition, this tasting sample had a combination of favorable sensation of alcohol, good lemon flavor, and favorable sweetness, and was alcohol with unprecedented and comfortable to drink.

## Claims

1. An alcoholic beverage, wherein an alcoholic beverage base mix containing alcohol and one or more kinds of water-soluble substances is mixed with ice pieces in a proportion of 20:80 to 80:20, and subjected to aeration, agitation, and cooling so that the volume fraction of gas contained therein is in the range of 1% to 150%, and so that the mixture temperature is lower than -1°C, whereby the resulting gas-containing matter has an alcohol concentration not less than 1.0% by volume, and has fluidity at a temperature of -15°C to -2°C, fine ice pieces with a major axis length of 0.06 mm to 0.8 mm being present in an amount of at least 80% by weight of the total so that the remaining of at least part of the fine ice pieces is sensed.

2. The alcoholic beverage of claim 1, wherein an alcoholic beverage base mix containing alcohol and one or more kinds of water-soluble substances is mixed with ice pieces in a proportion of 20:80 to 80:20, subjected to aeration, agitation, and cooling so that the volume fraction of gas contained therein is in the range of 1% to 150%, and so that the mixture temperature is lower than -1°C, and further freeze-hardened under temperature conditions not more than -20°C, whereby the resulting gas-containing matter has an alcohol concentration not less than 1.0% by volume, and is given fluidity upon increasing the temperature to -15°C to -2°C, fine ice pieces with a major axis length of 0.06 mm to 0.8 mm being present in an amount of at least 80% by weight of the total so that the remaining of at least part of the fine ice pieces is sensed.

3. The alcoholic beverage according to claim 1 or 2,
wherein the melting start temperature of said alcoholic beverage base mix is in the range of -20°C to -2°C in measurement using differential scanning calorimetry.

4. The alcoholic beverage according to any one of claims 1 to 3,
wherein said fine ice pieces are prepared by mixing ice pieces not passing through a sieve having an aperture of 3 mm with an alcoholic beverage base mix of a temperature not less than -1.0°C, and subjecting the mixture to aeration, agitation and cooling.

5. The alcoholic beverage according to any one of claims 1 to 4,
wherein fats and oils and/or a stabilizer are further mixed.

6. The alcoholic beverage according to any one of claims 1 to 5,
wherein at least one or more of fruit juice, fruit, sarcocarp, mesophyll, nuts and seeds, agar, and a jelly are further mixed.

7. The alcoholic beverage according to any one of claims 1 to 6,
wherein the alcoholic beverages of said claims 1 to 6 are filled into a cheer pack.

## Patentansprüche

1. Alkoholisches Getränk, wobei eine alkoholische Getränk-Grundmischung, welche Alkohol und eine oder mehr Arten von wasserlöslichen Substanzen enthält, mit Eisstücken in einem Verhältnis von 20:80 bis 80:20 gemischt wird, und Belüftung, Rühren (Schütteln) und Kühlen unterworfen wird, so dass der Volumenanteil an Gas, welches darin enthalten ist, im Bereich von 1 % bis 150 % liegt, und so dass die Gemischtemperatur niedriger als -1°C ist, wobei das resultierende gashaltige Material eine Alkoholkonzentration von nicht weniger als 1,0 Volumen-% aufweist, und Fluidität bei einer Temperatur von 15°C bis -2°C aufweist, wobei feine Eisstücke mit einer Hauptachsenlänge von 0,06 mm bis 0,8 mm in einer Menge von mindestens 80 Gewichts-%, bezogen auf das Gesamtgewicht, vorhanden sind, so dass der Rest von mindestens einem Teil der feinen Eisstücke gespürt wird.

2. Alkoholisches Getränk nach Anspruch 1, wobei eine alkoholische Getränk-Grundmischung, welche Alkohol und eine oder mehr Arten von wasserlöslichen Substanzen enthält, mit Eisstücken in einem Verhältnis von 20:80 bis 80:20 gemischt wird, Belüftung, Rühren (Schütteln) und Kühlen unterworfen wird, so dass der Volumenanteil an Gas, welches darin enthalten ist, im Bereich von 1 % bis 150 % liegt, und so dass die Gemischtemperatur niedriger als -1°C ist, und weiter unter Temperaturbedingungen von nicht höher als -20°C gefriergehärtet wird, wobei das resultierende gashaltige Material eine Alkoholkonzentration von nicht weniger als 1,0 Volumen-% aufweist, und Fluidität durch Erhöhen der Temperatur auf -15°C bis -2°C verliehen wird, wobei feine Eisstücke mit einer Hauptachsenlänge von 0,06 mm bis 0,8 mm in einer Menge von mindestens 80 Gewichts-%, bezogen auf das Gesamtgewicht, vorhanden sind, so dass der Rest von mindestens einem Teil der feinen Eisstücke gespürt wird.

3. Alkoholisches Getränk gemäß Anspruch 1 oder 2, wobei die Schmelzstarttemperatur der alkoholischen Getränk-Grundmischung im Bereich von -20°C bis -2°C bei Messung unter Verwendung von Differentialscanningkalorimetrie liegt.

4. Alkoholisches Getränk gemäß einem der Ansprüche 1 bis 3, wobei die feinen Eisstücke hergestellt werden durch Mischen von Eisstücken, welche nicht durch ein Sieb mit einem lichten Lochmaß von 3 mm passieren, mit einer alkoholischen Getränk-Grundmischung einer Temperatur von nicht niedriger als -1,0°C und Belüften, Rühren (Schütteln) und Kühlen des Gemisches.

5. Alkoholisches Getränk gemäß einem der Ansprüche 1 bis 4, wobei Fette und Öle und/oder ein Stabilisierungsmittel weiter gemischt werden.

6. Alkoholisches Getränk gemäß einem der Ansprüche 1 bis 5, wobei mindestens eines oder mehrere von Fruchtsaft, Frucht, Sarkokarp, Mesophyll, Nüsse und Samen, Agar und einem Gelee weiter gemischt werden.

7. Alkoholisches Getränk gemäß einem der Ansprüche 1 bis 6, wobei die alkoholischen Getränke der Ansprüche 1 bis 6 in ein Cheerpack gefüllt werden.

## Revendications

1. Boisson alcoolisée, dans laquelle un mélange de base pour boisson alcoolisée contenant de l'alcool et un ou plusieurs types de substances solubles dans l'eau est mélangé avec des morceaux de glace dans une proportion de 20:80 à 80:20, et soumis à aération, agitation et refroidissement de sorte que la fraction en volume de gaz contenu dans celui-ci est dans la plage de 1% à 150% et que la température du mélange est inférieure à -1°C, la matière contenant du gaz résultante ayant une concentration en alcool qui n'est pas inférieure à 1,0% en volume et est fluide à une température de -15°C à -2°C, de fins morceaux de glace ayant une longueur de grand axe de 0,06 mm à 0,8 mm étant présents en quantité d'au moins 80% en poids du total de sorte que le reste d'au moins une partie des fins morceaux de glace est perçu.

2. Boisson alcoolisée suivant la revendication 1, dans laquelle un mélange de base pour boisson alcoolisée contenant de l'alcool et un ou plusieurs types de substances solubles dans l'eau est mélangé avec des morceaux de glace dans une proportion de 20:80 à 80:20, soumis à aération, agitation et refroidissement de sorte que la fraction en volume de gaz contenu dans celui-ci est dans la plage de 1% à 150% et que la température du mélange est inférieure à -1°C, et congelé dans des conditions de température pas supérieures à -20°C, la matière contenant du gaz résultante ayant une concentration en alcool qui n'est pas inférieure à 1,0% en volume et est fluide à une température de -15°C à -2°C, de fins morceaux de glace ayant une longueur de grand axe de 0,06 mm à 0,8 mm étant présents en quantité d'au moins 80% en poids du total de sorte que le reste d'au moins une partie des fins morceaux de glace est perçu.

3. Boisson alcoolisée suivant la revendication 1 ou 2, dans laquelle la température de début de fusion du mélange de base de ladite boisson alcoolisée est dans la plage de -20°C à -2°C lors de la mesure par analyse calorimétrique différentielle.

4. Boisson alcoolisée suivant l'une quelconque des revendications 1 à 3, dans laquelle lesdits fins morceaux de glace sont préparés en mélangeant des morceaux de glace ne passant pas à travers un tamis ayant une ouverture de 3 mm avec un mélange de base de boisson alcoolisée à une température qui n'est pas inférieure à - 1,0°C et en soumettant le mélange à une aération, une agitation et un refroidissement.

5. Boisson alcoolisée suivant l'une quelconque des revendications 1 à 4, dans laquelle des matières grasses et des huiles et/ou un stabilisateur sont également mélangés.

6. Boisson alcoolisée suivant l'une quelconque des revendications 1 à 5, dans laquelle au moins un ou plusieurs jus de fruit, fruits, du mésocarpe, de la mésophylle, des noix et des graines, de l'agar et une gelée sont également mélangés.

7. Boisson alcoolisée suivant l'une quelconque des revendications 1 à 6, dans laquelle un emballage souple est rempli avec les boissons alcoolisées selon lesdites revendications 1 à 6.
